# EUROPEAN PATENT APPLICATION

(11) **EP 1 779 985 A1**
(43) Date of publication of application: **02.05.2007**
(21) Application number: 05388090.2
(22) Date of filing: 28.10.2005
(51) Int. Cl.: B27K 9/00

(54) **A method of carrying out a fireproofing treatment of rushes for thatching and an assembly for carrying out the method.**

(71) Applicant: A'Ollebolle Taek, 4894 Oster Ulslev (DK)
(72) Inventor: Vodder, Søren, 4894 Øster Ulslev (DK)
(74) Representative: Christensen, Bent

(57) **Abstract**

In a method of carrying out a fire-proofing treatment of rushes for thatching, the rushes for thatching are applied with a fire-retarding fluid, said fluid being applied by way of spraying or immersing onto the lowermost portion of the thatching material, typically 70 to 80 cm measured from the root. The treatment is carried out already during the cleaning and the processing of the thatching material and consequently before said thatching material is placed on the roof. The fireproof thatching material includes approximately 15% of water and can be placed on the roof immediately after the drying and the bundling. The method according to the invention is new and surprising by providing a thatching material which is fire-retarding on the portion of the stems facing the surroundings, and which is durable throughout the life of the entire roof. In addition, the costs of carrying out the fire-proofing by the method according to the invention are considerably lower than the costs involved in the hitherto known fire-proofing measures.

## Description

The present invention relates to a method of carrying out a fire-proofing treatment of rushes for thatching as well as to an assembly for carrying out the method.

For centuries, thatched roofs have been used as the conventional types of roofs for houses, especially in the North European countries, such as Denmark, Germany, The Netherlands and England. In addition to presenting an aesthetic and beautiful appearance, the thatched roofs were highly used due to their low weight, their outstanding heat-insulating properties, the good indoor climate, and not the least the easy availability and good durability of the most important raw material, viz. the rushes for thatching, especially in form of the species of grass: thatching miscanthus.

The most serious draw-back of these thatched roofs is their high content of biomass. If no fire-proofing is carried out, such thatched roofs are very easily inflammable, and therefore the buildings provided with roofs coated with reeds are subject to particular requirements with respect to fire-proofing, such as a specific distance must apply between the buildings and between the building and the boundary.

The fire-proofing of thatched roofs is carried out according to two principles. According to one principle, air is prevented from reaching the lower face of the roof, whereas the second principle stipulates a proofing by means of a fire retardant liquid which is sprayed onto the upper and lower face of the roof. In practice, air is prevented in several ways from reaching the lower face of the roof:

### a) Fire-proofing of a new thatched roof:

A base plaster is placed directly on top of the rafters. A spacer list is placed on top of the plaster and along the rafters and laths subsequently to the reeds. All the spaces between the laths are filled with rock wool or another insulation material. Such a method can only be used in connection with new buildings and a rethatching. The advantage of this method is that no flammable passage applies to the subjacent roof structure, and in connection with a fire extinguishing a waterproof base is provided with the effect that water damages are avoided to the maximum extent. In addition, the structure can be maintained in connection with a rethatching.

### b) Fire-proofing of existing thatched roofs:

An existing thatched roof can be provided with a fire-proofing by a particular mass being sprayed onto the lower face of the roof structure after the thatching of the roof, said mass possessing particular fire retardant properties. For this purpose it is possible for instance to use a rock wool granulate mixed with a particular concrete. However, the application of the material presents a complex procedure, and the application can only be carried out by particularly skilled persons provided with particular machines. Accordingly, this method is not used to a significant extent.

It is well known to provide flammable surfaces with a coating of or an impregnation with a fire retardant material. Thus, GB 2 290 989 describes a method of fire-proofing various surfaces by applying a sodium silicate solution onto said surfaces, allowing the applied solution to dry so as to form a silicate coating, and finally by applying a waterproof barrier layer on to the surface of the product. EP 1 158 112 A deals with protection of a thatched roof by incorporating a material which releases in a slow and controlled manner a fire retardant into the roof. The material can be in form of a film, strips or straws produced by an optionally synthetic polymer and starch, and the fire retardant can be sodium silicate. It is also possible to apply a fire retarding paint to the roof, cf. NL 9101915 A, and finally GB 2 105 382 A describes how it is possible to treat a thatched roof with a protecting fluid by covering the roof by means of a detachtable cover followed by a spraying of the straws below the cover by means of a pressurized fluid.

The fire-proofing can also be carried out by means of so-called "thatchbatts", which are non-inflammable lightweight plates of resin-bound Rockwool® intended to be used for fire-proofing the lower face of thatched roofs on new buildings and/or on extensions of existing buildings. These "thatchbatts" are arranged between the laths. As a result, a heat and sound insulation is obtained as well. In addition, if a barrier of aluminum foil is placed between the "thatchbatts" plates and the straws, it is possible to obtain a total fire-proofing between the thatched roof and the building.

It is common to these known treatment methods that they are either carried out on the roof after the mounting of said roof or they are established in connection with new buildings or new structures/extensions. In other words, the fire-proofing is usually a very comprehensive operation requiring much maintenance.

Accordingly, a demand exists for a method of carrying out a fire-proofing treatment of rushes for thatching, where said treatment is carried out directly on the thatching material already before said thatching material is placed on the roof.

The present invention provides such a method.

More particularly, the present invention relates to a method of carrying out a fire-proofing treatment of rushes for thatching, where said treatment is carried out already during the cleaning and processing of the thatching material and consequently before said thatching material is placed on the roof. The method according to the invention is characterised by applying by way of spraying or immersion a fire retarding fluid onto the lowermost portion of the thatching material, typically 70 to 80 cm measured from the root.

The thatching material is received harvested in bundles. These bundles are cut up, and the stems are spread in a suitably thin layer which is allowed to slide between two advancing belts. These advancing belts retain the layer of thatching material during the entire following procedure.

By the following procedure, the layer of thatching material initially passes through a cleaning unit provided with brushes with the result that the so-called "bottom dirt" including inter alia grass, leaves and weed is removed.

It is especially important that loose leaves are removed so that the stem is as clean and smooth as possible. In this manner the highest possible effect of applying a fire-retarding fluid onto the lowermost portion of the thatching material is obtained. When the fire-retarding fluid is applied by means of a sprayer, the stems must be vertically arranged which can be ensured by positioning the advancing belts at such an angle that it is possible to carry out a spraying/immersing method.

When the stems leave this step of the procedure, they must be dried. The drying is carried out by the stems being carried by means of the advancing belts into a blower system involving hot air with the result that most of the relative moisture of the stems is removed.

Finally, the dried stems are bundled by means of strings and packed in large rollers. The fire-proof thatching material is now ready for use.

In this manner a thatching material is obtained which is fire-retarding on the portion of the stem positioned outside the binder material. The fireproof thatching material includes approximately 15% of water and can be placed on the roof immediately after the drying and the bundling.

When the material is to be stored for a short or long period of time, it is necessary to place said material in a plane drying device in order to reduce the water content to below 15%.

The method according to the invention is new and surprising by providing a thatching material which is fire-retarding on the portion of the stems facing the surroundings, and which is durable throughout the life of the entire roof. In addition, the costs of carrying out the fire-proofing by the method according to the invention are considerably lower than the costs involved in the hitherto known fire-proofing measures. The hitherto known measures involve typically approximately 150 DKK/m², whereas the costs involved in carrying out the fire-proofing by the method according to the invention are of the magnitude 50 DKK/m², i.e. no more than a third of the previous costs.

The fire-retarding fluid to be used by the method according to the invention can be any fluid leaving a fire-retarding coating on the stems after the application thereon and drying thereof.

Some of the usable known fire-retarding fluids are for instance silicate solutions, such as solutions of sodium silicate, lithium silicate or mixtures thereof. Some boron compounds, such as compounds of boric acid, present also good fire-retarding properties and can be used by the method according to the invention.

As thatching material it is in particular preferred to use a variety of the grass species miscanthus, which is called thatching miscanthus. This variety of grass has been used as thatching material in Japan for thousands of years. In Denmark this variety has been grown as fibre crop since the 1990'ies. The applicant has selected suitable plants which have been propagated in vitro and are now grown on a large scale in order to cover the increasing demand for thatching material of a sufficiently high quality.

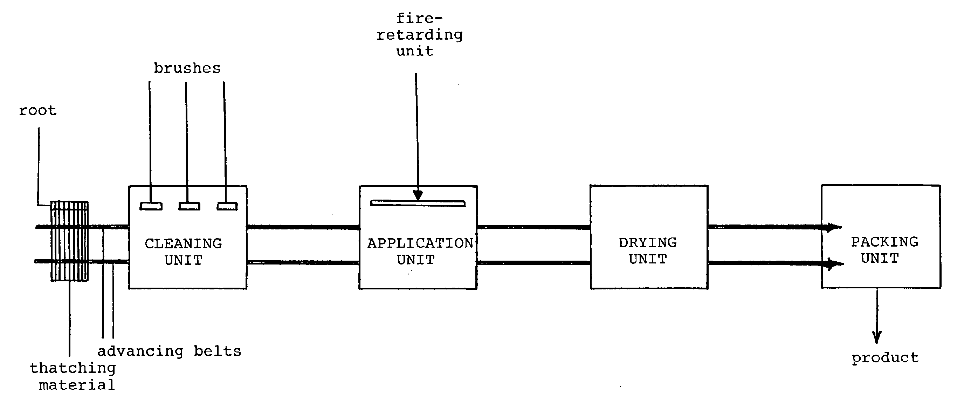

The invention relates also to an assembly for carrying out the above method. The assembly is outlined in the Figure and includes in sequence a cleaning unit, an application unit in form of a spraying and/or immersing system, a drying system, which typically includes a blower system with hot air, and optionally a succeeding plane drying unit, and finally a packing unit in which the treated material is subjected to a bundling.

The cleaning unit is provided with brushes with the result that the so-called "bottom dirt" including inter alia grass, leaves and weed is removed. As stated above, it is especially important that loose leaves are removed so that the stem is as clean and smooth as possible. In this manner the highest possible effect of applying a fire-retarding fluid onto the lowermost portion of the thatching material is obtained.

The application unit can be a spraying system, a system for immersing the thatching material into the fire-retarding fluid or a combination of these systems. As stated above, the method according to the invention is particular by applying by way of spraying or immersion a fire retarding fluid onto the lowermost portion of the thatching material, typically 70 to 80 cm measured from the root.

The succeeding drying is carried out by the stems being passed into a blower system involving hot air with the result that most of the relative moisture of the stems is removed. The blower system can be combined with a plane drying unit when it is a question of material to be stored for a short or long period of time. Then it is necessary to place the material in a plane drying unit in order to reduce the water content below 15%.

The entire conveying through the assembly is carried out by means of two advancing belts, where a suitably thin layer of stems are arranged between said two advancing belts. The thatching material is retained and conveyed by the two advancing belts during the entire process.

The invention is illustrated in greater detail below by means of the following example which exclusively illustrates the method and the assembly and does not serve to limit the invention in any way.

### Example

A thatching material in form of the grass variety miscanthus (thatching miscanthus) arrives to the treating assembly in bundles. The bundles are cut up, and the stems are spread in a suitably thin layer which is allowed to slide between the two advancing belts of the assembly. These advancing belts retain the layer of thatching miscanthus during the entire procedure.

Initially, the layer of thatching material passes through a cleaning unit provided with brushes which remove the so-called "bottom dirt". It is especially important that loose leaves are removed so that the stem is as clean and smooth as possible. In this manner the highest possible effect of applying a fire-retarding fluid onto the lowermost portion of the thatching material is obtained.

As fire-retarding fluid a solution of sodium silicate (Na₄SiO₄) is used, said fluid being applied by means of a sprayer in the succeeding application unit. During the application of fluid, the stems must be vertically arranged, which is obtained by the advancing belts being positioned at a specific angle.

When the stems leave the application unit after the completed application of the sodium silicate solution, they must be dried. The drying is carried out by the stems being carried by means of the advancing belts into a blower system involving hot air with the result that most of the relative moisture of the stems is removed. As a result the moisture content is approximately 15%.

Finally, the dried stems are bundled by means of strings and packed in large rollers. The fire-proof thatching material is now ready for use.

## Claims

1. A method of carrying out a fire-proofing treatment of rushes for thatching, whereby a fire-retarding fluid is applied onto the rushes for thatching, **characterised by** applying by way of spraying or immersion a fire retarding fluid onto the lowermost portion of the thatching material, typically 70 to 80 cm measured from the root, and by the treatment being carried out already during the cleaning and processing of the thatching material and consequently before said thatching material is placed on the roof.

2. A method according to claim 1, **characterised by** the fire-retarding fluid being selected among aqueous solutions of silicates, boric compounds and mixtures thereof.

3. A method according to claim 1 or 2, **characterised by** the rushes for thatching being of the variety miscanthus.

4. An assembly for carrying out the method according to any of the claims 1 to 3, **characterised in that** in sequence it includes a cleaning unit, an application unit in form of a spraying and/or immersing system, a drying unit which typically includes a blower system with hot air, and optionally a succeeding plane drying unit, and finally a packing unit.

5. An assembly according to claim 4, **characterised in that** the cleaning unit is provided with brushes with the result that grass, leaves and weeds are removed together with other undesired ingredients.

6. An assembly according to claim 4, **characterised in that** the application unit is a spraying system, a system for immersing the thatching material into the fire-retarding fluid or a combination of these systems.

7. An assembly according to claim 4, **characterised in that** the drying unit is a blower system with hot air, which is optionally combined with a plane drying unit.
